# EUROPEAN PATENT SPECIFICATION

(11) **EP 2 844 435 B1**
(45) Date of publication and mention of the grant of the patent: **06.06.2018**
(21) Application number: 13784531.9
(22) Date of filing: 19.04.2013
(51) Int. Cl.: A63H 33/00, B25J 9/16, A63H 17/36, A63H 18/16, G05D 1/02

(54) **LINE SENSING ROBOT AND A METHOD OF USING THE SAME WITH A DIGITAL DISPLAY**
ZEILENERFASSENDER ROBOTER UND VERFAHREN ZUR VERWENDUNG DAVON MIT EINER DIGITALANZEIGE
ROBOT DE DÉTECTION DE LIGNE ET SON PROCÉDÉ D'UTILISATION À L'AIDE D'UN DISPOSITIF D'AFFICHAGE NUMÉRIQUE

(30) Priority: 30.04.2012 US 201261640526 P; 04.10.2012 US 201213645039
(43) Date of publication of application: 11.03.2015
(73) Proprietor: Evollve, Inc., Redondo Beach, CA 90277 (US)
(72) Inventor: Abou-Hamda, Nader, Redondo Beach, CA 90277 (US)
(74) Representative: Pons
(86) International application number: PCT/US2013/037434
(87) International publication number: WO 2013/165710

(56) References cited:
- WO-A2-2006/120633
- GB-A- 2 475 273
- JP-A- 2006 340 853
- US-A- 4 618 254
- US-A- 5 596 255
- US-A1- 2008 310 677
- US-A1- 2008 320 419
- US-A1- 2010 230 198
- US-A1- 2011 046 780

## Description

### BACKGROUND

### Technical Field of the Invention

The present invention relates generally to a toy robot, and more specifically to a toy robot configured to move in a direction corresponding to a line on a base surface, the toy robot further being configured to operatively transition between use on a digital display and a non-digital display.

### Description of the Related Art

Those skilled in the art will readily appreciate that there has been a recent widespread proliferation of smart phones and tablet computers. Approximately half of the mobile phone consumers in the United States own a smart phone, and it is projected that by 2013, smart phones could account for around 70% of all U.S. mobile devices. With regard to tablet computers, approximately 31% of Internet users in the United States are believed to own a tablet computer.

Smart phones and tablet computers are typically compact in size relative to a conventional desktop computer, and include a touch screen display which a user may use to input commands. Smart phones generally define a slightly smaller form factor relative to tablet computers, and thus, the display screen on a smart phone is typically smaller than the display screen on a conventional tablet computer.

Smart phones and tablet computers generally include sufficient computing capability to allow games, educational tools and the like to be played and operated thereon. Several games and educational tools (collectively referred to herein as applications or "apps.") may be downloaded onto the smart phones and tablet computers via the Internet. Due to the compact size of both smart phones and tablet computers, such devices may be easily transported for use in almost any location. For instance, smart phones and tablet computers may be used in the car during road trips, on airplanes, in waiting rooms, or even around the house. In view of the ease in transporting the devices, smart phones and tablet computers are readily used by children of all ages for entertainment and educational purposes.

JP2006340853A discloses a toy vehicle body equipped with optical sensors with light emitters and light receivers.

US5596255A discloses a self-propelled electronic device in the form of a microrobot, according to the preamble of claim 1.

One deficiency commonly associated with games and educational tools for smart phones and tablet computers is that the entirety of the game is contained within the screen of the smart phone or tablet computer. In other words, the game is two-dimensional. Thus, children may quickly become bored or disinterested in the game since there is no tangible aspect to the game, other than the smart phone or tablet computer, which the child can touch or see.

Therefore, there is a need in the art for an improved accessory configured for use with a smart phone and/or tablet computer that provides additional entertainment value and interest to a child playing a game or using an educational tool. Various aspects of the present invention address these particular needs, as will be discussed in more detail below.

### SUMMARY

There is provided a method of providing a visual progress indicator. The method includes providing a digital display including a smooth flat display surface. The method further includes placing a self-propelled electronic device upon the display surface and electronically displaying a line segment upon the display surface. The line segment is sensed using the device, and the device is automatically moved along the line segment in response to sensing the line segment.

Various aspects of the present invention allow for use of a self-propelled electronic device on the surface of a digital display. The digital display is configured to generate a line segment along which the self-propelled electronic device moves. The electronic device may be a toy robot which travels along the surface of the electronic device to provide entertainment to a child. The movement of the electronic device may be associated with a game or as part of a learning tool.

The digital display may be a mobile computing device. The line segment displayed by the digital display may be defined by a line color, wherein the line segment is displayed with a background color immediately adjacent to the line segment, where the line color is different than the background color. The line segment may also be defined by a line pixel variance value. The line segment may be displayed with a background pixel variance value immediately adjacent to the line segment, wherein the line pixel variance value and the background pixel variance value are different.

The electronic device may include a line sensor, which may include a phototransistor element. The line sensor may be sized and configured to sense the line segment based upon a color difference of the line color and the background color. The line sensor may also be sized and configured to sense the line segment based upon a pixel variance value difference of the line pixel variance value and the background pixel variance.

The method may further include extending the line segment and sensing the extended line segment using the electronic device. The method may further include automatically moving the electronic device along the extended line segment.

The digital display may be a touch screen, and the method may additionally include detecting physical contact with the display surface, extending the line segment in response to the detected physical contact with the display surface, and sensing the extended line segment using the device.

According to another aspect of the present invention, there is provided a self-propelled electronic device for use on a base surface. The electronic device includes a chassis disposable over the base surface. The chassis includes a first surface facing the base surface when the chassis is disposed over the base surface. A light meter is coupled to the chassis and is configured to detect light incident toward the first surface and determine a luminance level of the detected light. A light source is also coupled to the chassis and is configured to selectively transition between an ON state to emit light away from the first surface and an OFF state to not emit any light. A control unit is coupled to the chassis and is in operative communication with the light meter and the light source. The control unit is configured to transition the light source to the ON state in response to the luminance level of the detected light being below a threshold luminance and to the OFF state in response to the luminance level of the detected light being above the threshold luminance. A line sensor is coupled to the chassis and is configured to sense a line segment on the base surface. A movement mechanism is coupled to the chassis and is placeable on the base surface. The movement mechanism is in operative communication with the line sensor to move on the base surface in a pattern corresponding to the line sensed on the base surface.

Various aspects of the self-propelled electronic device are directed toward allowing the electronic device to seamlessly transition from use on a light emitting base surface (such as an iPad™) to use on a non-emitting base surface, such as a desk or table. The electronic device includes a light meter to monitor the brightness of the light under the chassis, such that when the brightness is low (as may be the case when the electronic device is placed on a table), the light source is turned ON to illuminate the base surface. When the brightness is high, the light source is turned OFF so as not to wash out the line depicted on the base surface.

The electronic device may include a power device in operative communication with the light meter, the light source, and the line sensor. The power device may be configured to store and provide electrical power to the light meter, the light source and the line sensor. The power device may be configured to cease power transmission to the light meter, the light source, the line sensor and the movement mechanism in response to inactivity for a preset time period.

The present invention is best understood by reference to the following detailed description when read in conjunction with the accompanying drawings.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is an upper perspective view of an embodiment of a toy robot configured to move in a direction corresponding to a line on a base surface;
Figure 2 is a side view of the toy robot shown in Figure 1, with a case coupled to a lower end portion thereof;
Figure 3 is a bottom view of the toy robot depicted in Figure 1;
Figure 4 is an upper perspective view of the toy robot depicted in Figure 1 placed on a display surface of a computing device;
Figure 5 is a schematic view of several electrical components incorporated into an embodiment of the toy robot;
Figure 6 is a top view of a computing device depicting a line segment defined by a pair of selectively positional puzzle pieces;
Figure 7 is a top view of a computing device depicting a line segment defined by four selectively positional puzzle pieces;
Figure 8 is a top view of a computing device depicting a line segment in a maze-like configuration;
Figure 9 is a top view of a computing device depicting an educational game for defining a line segment along which the toy robot may move;
Figure 10 is an upper perspective view of a table having a line segment depicted thereon;
Figure 11 is a side view of the toy robot on the table, wherein the toy robot includes a light source to illuminate the line depicted in the table; and
Figure 12 is a schematic diagram of exemplary line commands readable and executable by the toy robot for controlling the movement of the robot.

Common reference numerals are used throughout the drawings and detailed description to indicate like elements.

### DESCRIPTION

The detailed description set forth below is intended as a description of the presently preferred embodiment of the invention, and is not intended to represent the only form in which the present invention may be constructed or utilized. The description sets forth the functions and sequences of steps for constructing and operating the invention. It is to be understood, however, that the same or equivalent functions and sequences may be accomplished by different embodiments and that they are also intended to be encompassed within the scope of the invention.

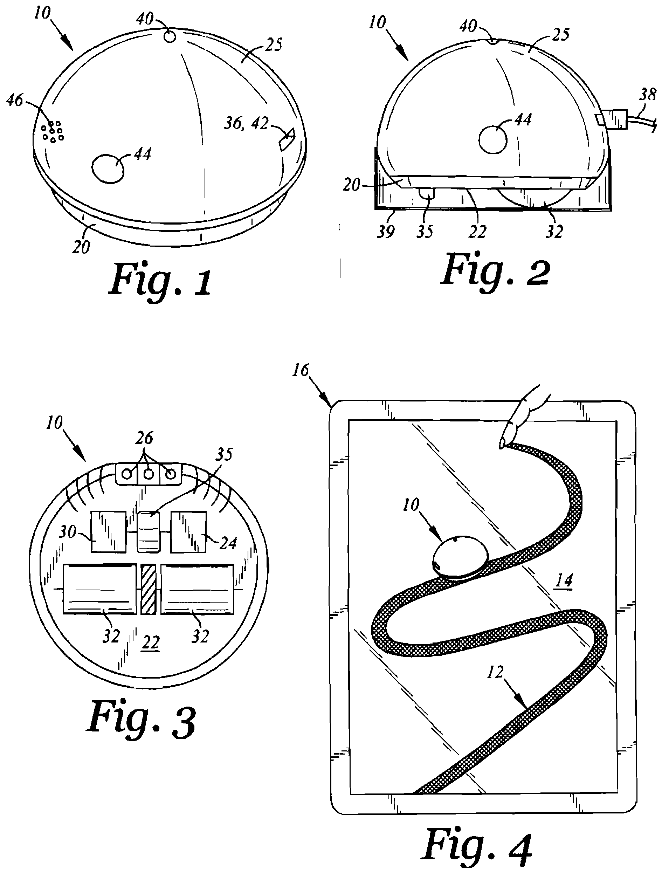

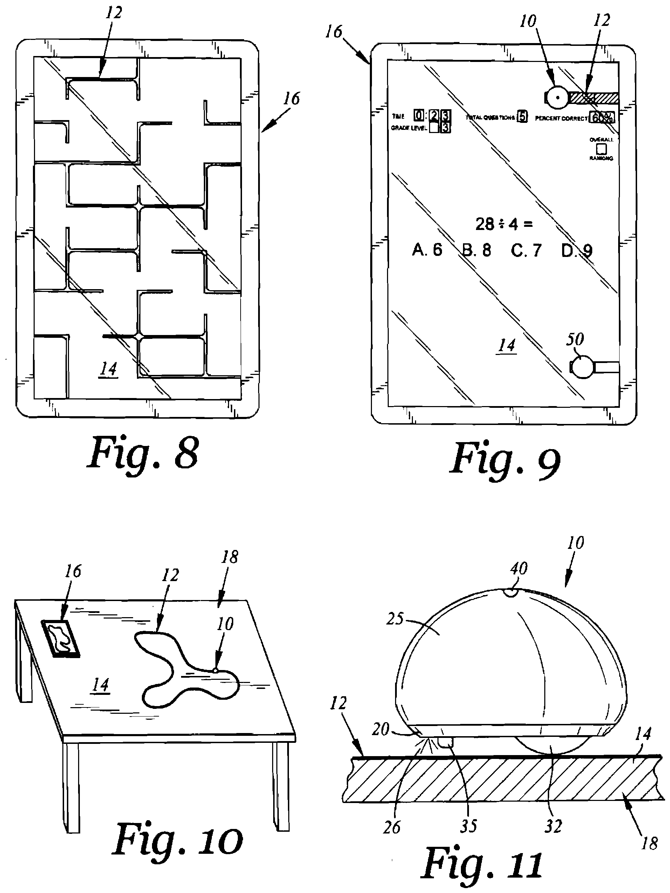

Referring now to the drawings, wherein the showings are for purposes of illustrating preferred embodiments of the present invention only, and are not for purposes of limiting the same, Figures 1-3 generally depict an embodiment of a self-propelled electronic device, i.e., a toy robot 10, configured to follow a line segment 12 (see Figure 4) appearing on a base surface 14 (see Figure 4). The base surface 14 may be the display screen of an electronic computing device 16 (see Figure 4), such as a smart phone or tablet computer, or alternatively, the base surface 14 may include the top of a table/desk 18 (see Figure 10). In this regard, the toy robot 10 may be configured for use with devices which emit light (such as a tablet computer) as well as objects which simply reflect light (such as a table or counter). For purposes of the following discussion, devices which emit light will be referred to herein as "self-emitting devices," whereas objects which do not emit light and instead, simply reflect light will be referred to herein as "non-emitting objects." Various aspects of the present invention are directed toward facilitating seamless transition of the toy robot 10 between use on the surface of the self-emitting device 16, and the surface of the non-emitting object 18.

The toy robot 10 includes a chassis 20 including a first surface 22 (i.e., outer surface) and a second surface (i.e., inner surface). When the robot 10 is disposed on the base surface 14, the first surface 22 of the chassis 20 is disposed in spaced relation to the base surface 14 (see Figure 11) and is oriented in a manner wherein the first surface 22 is facing the base surface 14. As will be discussed in more detail below, the robot 10 includes a movement mechanism, i.e., wheels, which is placed directly on the base surface 14 and causes the first surface 22 to be spaced from the base surface 14.

The robot 10 additionally includes a housing 25 coupled to the chassis 20. In the exemplary embodiment, the housing 25 defines a generally rounded configuration, although other configurations may be defined in other implementations of the present invention. The housing 25 and chassis 20 collectively define an inner compartment which houses several of the control and power components described below. The housing 25 and chassis 20 may be fabricated from plastic, rubber or other materials commonly used in the art.

The toy robot 10 additionally includes a light meter 24 coupled to the chassis 20 and configured to detect light incident toward the first surface 22 of the chassis 20 for determining a luminance level of the detected light. As used herein, the phrase "light incident toward the first surface 22 of the chassis 20" refers to light traveling toward the first surface 22, including light emitted from a self-emitting device, as well as light reflected from a non-emitting object. Light emitted from an illuminated base surface 14, such as the surface of an iPad™, may travel toward the first surface 22 when the robot 10 is placed on the base surface 14. Thus, light emitted from the iPad™ may be "light incident toward the first surface 22 of the chassis 20." Furthermore, it is also contemplated that when the toy robot 10 is placed on a non-illuminated surface 18, such as a desk or table, light may reflect off the surface of the desk or table and travel toward the first surface 22, and thus, may be "light incident toward the first surface 22 of the chassis 20."

Those skilled in the art will readily appreciate that the luminance level of the light incident toward the first surface 22 will vary according to several different factors. One significant factor is whether the base surface 14 is part of a self-emitting device 16 or conversely, part of a non-emitting object 18. The luminance level of the light incident on the first surface 22 will, in most cases, be greater when the base surface 14 is part of a self-emitting device 16, rather than when the base surface 14 is part of a non-emitting object 18.

If the luminance level is too low, it may be difficult for the toy robot 10 to detect the line segment 12 on the base surface 14. Therefore, the toy robot 10 includes a light source 26 (see Figures 3, 5, and 11) coupled to the chassis 20 for illuminating the line segment 12 on the base surface. The light source 26 is configured to selectively transition between an ON state to emit light away from the first surface 22, and an OFF state to not emit any light. Referring now specifically to Figure 11, when the luminance level is too low, the light source 26 may be in the ON state to direct light toward the base surface 14 for making it easier to detect the line segment thereon. Conversely, when the luminance level is above a sufficient level, the light source 26 is turned into the OFF state so as not to emit any light to avoid washing out the line segment on the base surface 14.

In this regard, it is contemplated that a user may place the robot 10 on a self-emitting device to follow a line segment 12 depicted thereon. Subsequently, the user may lift the robot 10 from the self-emitting device and place the robot 10 on a non-emitting object to follow a separate line segment 12 depicted thereon. When the robot 10 is on the self-emitting device, the luminance level is typically above the threshold, and thus, the light source 26 is in the OFF state. However, when the user places the robot 10 on the non-emitting surface, the luminance level is typically below the threshold, and thus, the light source 26 transitions to the ON state.

In the reverse scenario, i.e., when the robot 10 is lifted from a non-emitting object and placed on a self-emitting device, the light source 26 typically transitions from the ON state to the OFF state since the luminance level typically increases from below the threshold to above the threshold.

The light source 26 may include any lighting mechanism known in the art capable of providing sufficient light under the robot 10 for illuminating the line segment 12. In the exemplary embodiment depicted in Figure 3, the light source 26 includes three light emitting devices (LEDs) positioned adjacent a peripheral portion of the chassis 20. However, the number and position of the LEDs or equivalent lighting mechanisms may be varied without departing from the scope of the present invention. For instance, some embodiments may include fewer than three LEDs, while other embodiments may include more than three LEDs.

According to one implementation, the threshold luminance is approximately equal to 80-120 cd/m² (80-120 nits), and preferably approximately equal to 100 cd/m² (100 nits). Therefore, in an embodiment wherein the threshold luminance is equal to 100 cd/m² (100 nits), if the luminance of the detected light is below 100 cd/m2 (100 nits), the light source 26 will automatically be placed in the ON state to direct light away from the first surface 22 and toward the base surface 14. However, if the luminance of the detected light at any time exceeds 100 cd/ m2 (100 nits), the light source 26 will automatically transition to the OFF state to cease light emission. Although the foregoing lists 80-120 cd/m2 (80-120 nits) as an exemplary threshold luminance range, those skilled in the art will readily appreciate that other embodiments may define the threshold luminance as being less than 80 cd/m2 (80 nits) or greater than 120 cd/m2 (120 nits).

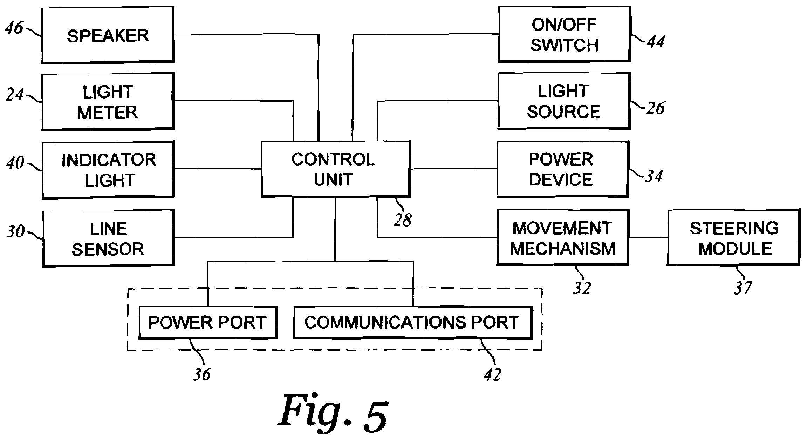

According to one embodiment, the toy robot 10 includes a control unit 28 (see Figure 5) coupled to the chassis 20 and in operative communication with the light meter 24 and the light source 26. The control unit 28 is configured to transition the light source 26 to the ON state in response to the luminance level of the detected light being below a threshold luminance and to the OFF state in response to the luminance level of the detected light being above the threshold luminance.

The toy robot 10 further includes a line sensor 30 (see Figures 3 and 5) coupled to the chassis 20 and configured to sense a line segment 12 on the base surface 14. The line sensor 30 employs optical technology to discern different optical characteristics between the line segment 12 and the remainder of the base surface 14. The discerned optical difference is generally representative of the boundary between the line segment 12 and the background color or display.

According to an embodiment, the line segment 12 is defined by a line color. In that case, the line segment 12 is displayed with a background color depicted on the base surface 14 immediately adjacent to the line segment 12, wherein the line color and the background color are different. The line sensor 30 may be sized and configured to sense the line segment 12 based upon a color difference of the line color and the background color.

According to another embodiment, the line segment 12 is defined by a line pixel variance value. In that case, the line segment 12 is displayed with a background pixel variance value immediately adjacent to the line segment 12, wherein the line pixel variance value and the background pixel variance value are different. The line sensor 30 may be sized and configured to sense the line segment 12 based upon a pixel variance value difference of the line pixel variance value and the background pixel variance.

The line sensor 30 may be positioned in various locations on the robot 10 without departing from the spirit and scope of the present invention. Although the exemplary embodiment shows the line sensor 30 positioned between the movement mechanism 32 and the light source 26, it is understood that other embodiments may include the line sensor 30 in other locations. For instance, one particular implementation may include the line sensor 30 positioned proximate, and in the same vicinity as the light source(s) 26.

A movement mechanism 32 is coupled to the chassis 20 and is placeable on the base surface 14. The movement mechanism 32 is in operative communication with the line sensor 30 to move on the base surface 14 in a pattern corresponding to the line segment 12 sensed on the base surface 14. According to one embodiment, the movement mechanism 32 includes at least one wheel, and preferably a plurality of wheels. The plurality of wheels may be driven by a drive mechanism, which may be a "wind-up" type drive mechanism, wherein a user winds a shaft or pushes the device in reverse to wind the drive mechanism. Alternatively, the drive mechanism may be electrically powered. Referring now specifically to Figures 2 and 3, the robot 10 may be primarily supported by the wheels 32, although the chassis 20 may include an auxiliary support 35 for balancing the robot 10 as it moves. In this regard, the auxiliary support 35 may come in contact with the base surface 14 if the robot 10 tips toward the auxiliary support.

The robot 10 may be turned via a wheel connected to a pivotable axle. The pivoting axle may be part of a steering module 37, which is controlled by the control unit 28. In particular, the control unit 28 may transmit commands to the steering module 37 to pivot the axle in response to a detected turn in the line segment 12 to guide the robot 10 along the line segment 12. In another embodiment, the steering module 38 may be in direct communication with the drive wheels, such that turning is controlled by varying the output of wheels. For instance, if the robot 10 includes a pair of wheels, power may be increased to one wheel and decreased to the other wheel to create a differential which results in turning/steering of the robot 10. Other steering/turning mechanisms known in the art may also be employed.

Although the foregoing describes the exemplary embodiment of the movement mechanism 32 as including wheels, it is contemplated that other movement elements may be incorporated into the movement mechanism 32. For instance, in one embodiment, the movement elements may include one or more rotating tracks, similar to a tank. In another embodiment, the movement mechanism may employ a propeller, similar to a hovercraft, for moving the robot 10.

Referring now specifically to Figure 2, the robot 10 may optionally include an end cap 39 connectable to the chassis 20 and/or housing 25 to cover the first surface 22 and the movement mechanism 32. The end cap 39 may be used to protect the light source 26, line sensor 30, light meter 24, and movement mechanism 32 during periods of non-use.

The toy robot 10 may additionally include a power device 34, such as an onboard battery, in operative communication with the light meter 24, the light source 26, and the line sensor 30. The power device 34 may be configured to store and provide electrical power to the light meter 24, the light source 26 and the line sensor 30. In embodiments having an electric drive mechanism and steering module for driving the movement mechanism 32, the power device 34 may be in operative communication therewith and operative to store and provide electrical power thereto.

According to one embodiment, the power device 34 is configured to cease power transmission to the light meter 24, the light source 26, the line sensor 30 and the movement mechanism 32 in response to inactivity for a preset time period. For instance, the preset period of time may be in the range from 30-60 seconds, and preferably 45 seconds; although those skilled in the art will readily appreciate that the preset period of time may be less than 30 seconds or greater than 60 seconds without departing from the spirit and scope of the present invention. If there is no movement for the preset time period, the power device 34 may be configured to cease power to the various components receiving power therefrom, such as the light meter 24, the light source 26, and the line sensor 30. In some cases, the power device 34 may be in electrical communication with the movement mechanism 32, in which case, the power device 34 may cease power thereto in response to inactivity for a period of time exceeding the threshold.

According to various aspects of the present invention, the toy robot 10 includes a power port 36 in operative communication with the power device 34. The power port 36 is configured to be connectable with an external power source 38 for recharging the power device 34. The power port 36 may be a USB port capable of receiving a USB connector 38 for charging the power device 34. Other ports having a size and configuration that differ from a USB port may also be used. Although the preferred embodiment includes a rechargeable power device 34, it is contemplated that other embodiments of the robot 10 employ replaceable batteries as the power device 34.

The toy robot 10 may additionally include an indicator light 40 coupled to the chassis 20 and in operative communication with the control unit 28. The indicator light 40 may be configured to emit light signals representative of one or more operating conditions. For instance, the indicator light 40 may emit a first signal corresponding to the power level of the power device 34. For instance, the first signal may be brighter when the power level of the power device 34 is high, and dimmer when the power level of the power device 34 is low. Furthermore, the indicator light 40 may emit a second signal when the toy robot 10 is moving and a third signal when the toy robot 10 is stationary, wherein the second signal differs from the third signal. The second signal may include a blinking signal, wherein the frequency of the signal corresponds to the speed of the toy robot 10, i.e., as the robot 10 moves faster, the frequency increases, and vice versa. The third signal may be a constant signal, either constantly ON or OFF, to differentiate from the second signal.

According to other implementations, the various signals emitted by the indicator light 40 may vary not only by frequency and brightness (as noted above), but also by color. In this regard, the indicator light 40 may include one or more light emitting devices (LEDs) capable of generating light signals in several different colors.

The toy robot 10 may further include a communications port 42 for programming the toy robot 10. The communications port 42 may be capable of receiving programming instructions from a programming device, such as a computer, smart phone, tablet computer or other programming devices known in the art. There may be several aspects of the toy robot 10 capable of being modified via programming instructions. For instance, the various signals emitted by the indicator light 40 may be changed or assigned via programming instructions. Furthermore, the preset time period at which the power device 34 ceases power transmission may also be altered or modified through programming.

The algorithm which governs the path chosen by the toy robot 10 may also be modified through programming. For instance, if the line segment 12 reaches an intersection or branches off to form a fork or "Y" in the line segment 12, the toy robot 10 may be programmed to assign a specific instruction when the toy robot 10 has more than two options (i.e., more than one line segment 12 which it may follow). The toy robot 10 may be programmed to randomly follow one of line segment options. Alternatively, the toy robot 10 may be programmed to always turn right, when possible, or always turn left, when possible, or to alternate between turning right and left. Furthermore, the device may be programmed to go straight, if possible, but if not possible to turn either right or left. It may also be possible to program the device 10 to reverse direction under certain conditions (i.e., reach the end of the line or an intersection). The robot 10 may be pre-programmed to follow default commands, which may be superseded by subsequent programming.

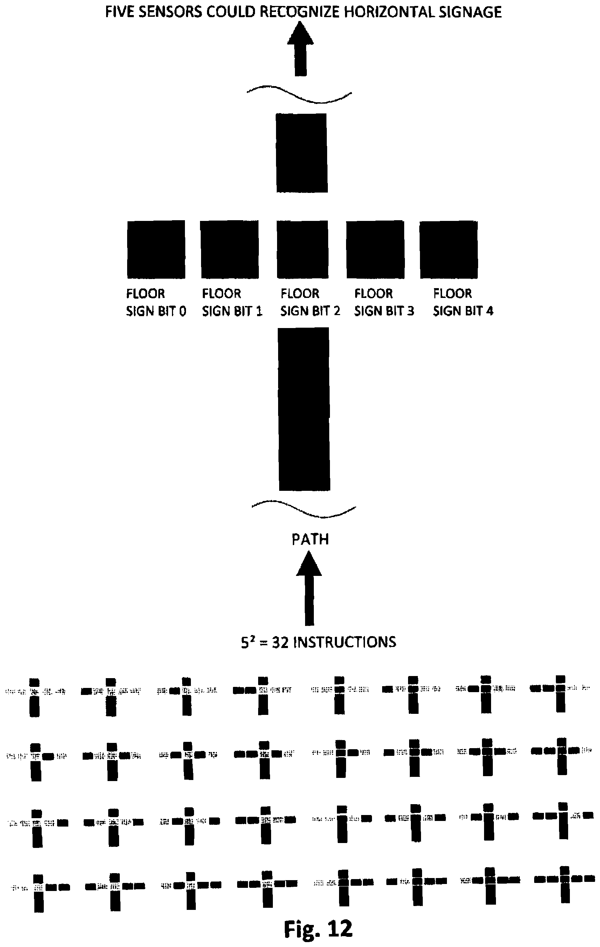

It is also contemplated that steering or movement of the robot 10 may be controlled via codes which form part of the line segment 12 or are located adjacent the line segment 12. Referring now specifically to Figure 12, the display screen may depict one or more command signals readable by the line sensor 30 for steering the robot 10. The exemplary command signals include five boxes which are either filled in, or left blank to generate an optical command signal. For instance, if all of the boxes are blank, the robot may stop. If only the left-most box is filled in, the robot 10 may be instructed to take the left-most turn when it reaches an intersection. If only the center-left box is filled, the robot 10 may take a fork to the left when it approaches a fork. If only the center box is filled in, the robot 10 may speed-up. If the right-center box is filled, the robot 10 may take a fork to the right when it approaches a fork. If only the right-most box is filled in, the robot 10 may take a right turn when it reaches an intersection. The aforementioned commands are exemplary in nature only, and are not intended to limit the scope of the present invention. Furthermore, the optical commands are not limited to square boxes; other shapes may also be used in other embodiments. In addition, optical commands may be represented via different color schemes which form part of the line segment 12. In this regard, a yellow line segment may represent a first command, while a red line segment may represent a second, different command.

The robot 10 may be configured to read the various commands depicted on the display screen. In this regard, the line sensor 30 may be configured to sense or read the various optical signals, and the control unit 28 may include processing capability to understand the various signals and generate instructions for the movement mechanism 32 and the steering module 37. It is contemplated that the software for recognizing the various optical commands may be updated on the control unit 28 as needed.

The communications port 42 may be configured to connect with a programming device via a cable 38 to facilitate wired communication between the toy robot 10 and the programming device. In the exemplary embodiment, the communications port 42 is shared with the power port 36, and more specifically, a single USB port which connects with a USB cable to simultaneously recharge the power device 34 and program the toy robot 10. In an alternatively embodiment, the communications port 42 is a wireless port configured to receive a wireless signal from the programming device. In this regard, the wireless programming port may not be externally visible, and may be contained with the housing of the toy robot 10.

The robot 10 may include an ON/OFF switch or button 44 to allow a user to turn the robot 10 ON or OFF. The ON/OFF button 44 may be externally located to allow the user to easily press the ON/OFF button 44 as desired.

According to one embodiment, the robot 10 includes a speaker 46 to emit audible signals during operation of the robot 10. The speaker 46 may play songs, communicate instructions, or simply emit "beeps." For instance, the audible signals may correspond to movement of the robot 10 (i.e., frequency of beep increases as speed increases), the power level, the mode of operation (i.e., always turn left when the robot 10 reaches an intersection), etc. The speaker 46 is in operative communication with the control unit 28, and thus, the audible signals emitted by the speaker 46 may be programmed via connection of a programming device to the communications port 42.

Although the foregoing discussion focuses on the robot 10 itself, various aspects of the present invention are directed toward configuring a digital display for use with the toy robot 10. In this regard, the digital display may be configured to generate the line segment 12 to allow the toy robot 10 to move on the digital display, wherein the movement of the toy robot 10 corresponds to the pattern of the line segment 12 generated by the digital display. As noted above, the digital display may include any device capable of generating a digital image of the line segment 12. In this regard, the digital display may include a mobile computing device, such as a smart phone, PDA, tablet computer, hand-held video game unit, etc. The digital display may also include a smooth flat display surface, typically fabricated from glass, plastic, or the like, which covers the digital screen.

The line segment 12 may be extended on the digital display, such that when the toy robot 10 is placed on the digital display, the line segment 12 is sensed and the toy robot 10 automatically moves along the line segment 12. It is contemplated that the digital display may be a touch screen, wherein the digital display is capable of detecting physical contact between the toy robot 10 and the display surface and extending/generating the line segment 12 in response to the detected physical contact with the display surface.

It is additionally contemplated that the digital display and the toy robot 10 may be in wireless communication with each other, such that when the digital display receives a wireless signal indicating that the toy robot 10 is within an operative range, the display surface extends/generates the line segment in response to receiving the wireless signal from the toy robot 10. As such, both the digital display and the toy robot 10 may include sufficient transceiving hardware and software to implement the aforementioned wireless detection.

The digital display may include software for generating the line segment 12 thereon. According to one implementation, the software may be downloadable onto the digital display as a downloadable application, i.e., "app." The app may be available for purchase, or alternatively, offered at no cost to the user.

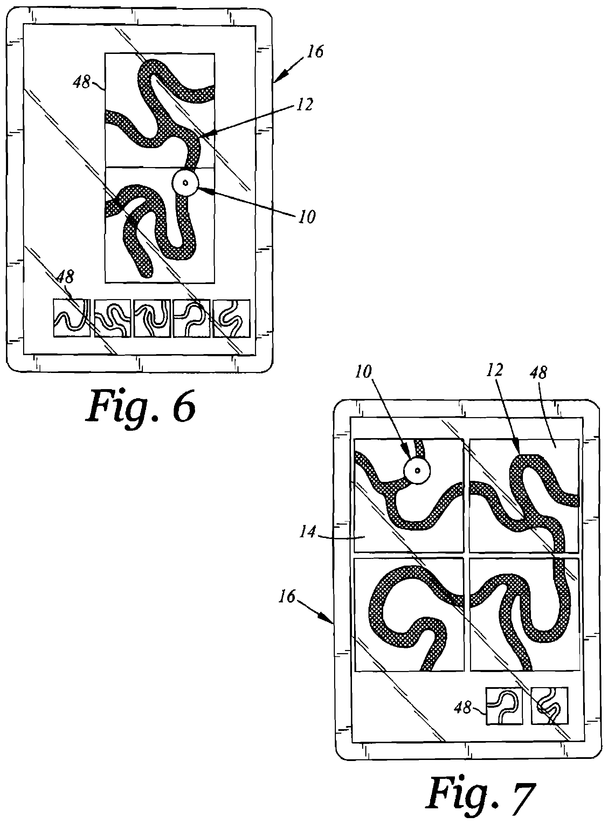

The app. may be relatively simple and merely generate line segments 12 on the display screen for the robot 10 to follow. Conversely, the app. may be more sophisticated and generate line segments 12 in connection with an activity or game. For instance, the line segments 12 may be constructed with one or more puzzle pieces 48 (see Figures 6 and 7) which may be selectively arranged on the display screen to construct a unique line segment 12. Alternatively, the app. may generate a maze-like line segment configuration (see Figure 8) for the robot 10 to explore.

Referring now specifically to Figure 9, the app. may be more of an educational app., wherein a player is quizzed with questions and the line segment 12 is generated when the child answers correctly. The app. may not only display the line segment 12 of the primary user, but also the line segment 12 of a competing user, which may be located in a remote location. In Figure 9, the line segment 12a associated with the primary user is shown on the top or upper potion of the digital display, while the line segment 12b and robot icon 50 of the competing player is shown on the bottom or lower portion of the display screen. As noted above, the position of the respective robots 10 may be determined via the touch screen feature of the display screen or via wireless communication between the robots 10 and the respective display screens.

The robot 10 adds an entertaining feature to conventional smart phones, tablet computers, and the like, in that it provides a concrete, three-dimensional accessory which moves relative to the computing device when a child plays with the computing device. In this regard, the child is not simply engaged with the two-dimensional display screen provided by the computing device. Rather, the robot 10 provides a three-dimensional entertainment unit which is more entertaining for the child.

The entertainment provided by the robot 10 may be enhanced by providing a character accessory which may be engaged with the robot 10. In particular, the child's favorite hero, princess, animal, etc. may be adapted as a covering which fits over the housing 25 to couple the covering to the housing 25, such that when the robot 10 moves, the covering moves.

The above description is given by way of example, and not limitation. Given the above disclosure, one skilled in the art could devise variations that are within the scope of the invention disclosed herein. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A self-propelled electronic device for use on a base surface (14), the electronic device comprising:
• a chassis (20) disposed, in use, over the base surface, the chassis having a first surface (22) facing the base surface when the chassis is disposed over the base surface;
• a light meter (24) coupled to the chassis and configured to:
- detect light incident toward the first surface; and
- determine a luminance level of the detected light,
• a line sensor (30) coupled to the chassis and configured to sense a line segment (12) on the base surface; and
• a movement mechanism (32) coupled to the chassis and placeable on the base surface, the movement mechanism being in operative communication with the line sensor to move on the base surface in a pattern corresponding to the line sensed on the base surface, the self-propelled electronic device being **characterized by** comprising:
• a light source (26) coupled to the chassis and configured to selectively transition between an ON state to emit light away from the first surface and an OFF state to not emit any light; and
• a control unit (28) coupled to the chassis and in operative communication with the light meter and the light source, the control unit being configured to transition the light source to the ON state in response to the luminance level of the detected light being below a threshold luminance and to the OFF state in response to the luminance level of the detected light being above the threshold luminance.

2. The electronic device of claim 1, further comprising a power device (34) in operative communication with the light meter, the light source, and the line sensor, the power device being configured to store and provide electrical power to the light meter, the light source and the line sensor.

3. The electronic device of claim 2, wherein the power device is configured to cease power transmission to the light meter, the light source, the line sensor and the movement mechanism in response to inactivity for a preset time period.

4. The electronic device of claim 1, wherein the threshold luminance is approximately equal to 100 cd/m².

5. The electronic device of claim 1, wherein the line sensor is configured to sense the line in the base surface based on detected color differences of a line color defined by the line segment and a background color of the base surface.

6. A method of providing a visual progress indicator, the method comprising:
(a) providing for a self-propelled electronic device including: a first surface (22) facing a base surface (14) when the electronic device is placed on the base surface; and a light source (26) configured to selectively transition between an ON state to emit light toward the base surface and an OFF state to not emit any light;
(b) determining a luminance level of a light incident toward the first surface;
(c) transitioning the light source to the ON state in response to the luminance level being below a threshold luminance and to the OFF state in response to the luminance level being above the threshold luminance;
(d) sensing a line segment (12) on the base surface using the device; and
(e) automatically moving the device along the line segment in response to the sensed line segment.

7. The method of claim 6 wherein the base surface is defined by a digital display.

## Patentansprüche

1. Selbstfahrende elektronische Vorrichtung zur Verwendung auf einer Grundfläche (14), wobei die elektronische Vorrichtung Folgendes umfasst:
• ein Chassis (20), das bei Verwendung über der Grundfläche angeordnet ist, wobei das Chassis eine erste Fläche (22) aufweist, die der Grundfläche zugewandt ist, wenn das Chassis über der Grundfläche angeordnet ist;
• einen Lichtmesser (24), der mit dem Chassis gekoppelt und für Folgendes konfiguriert ist:
- Erfassen von Licht, das auf die erste Oberfläche einfällt; und
- Bestimmen des Leuchtdichteniveaus des detektierten Lichts,
• einen Zeilensensor (30), der mit dem Chassis gekoppelt und konfiguriert ist, um ein Zeilensegment (12) auf der Grundfläche zu erfassen; und
• einen Bewegungsmechanismus (32), der mit dem Chassis gekoppelt und auf der Grundfläche platzierbar ist, wobei der Bewegungsmechanismus in Wirkverbindung mit dem Zeilensensor steht, um sich auf der Grundfläche in einem Muster zu bewegen, das der auf der Grundfläche erfassten Zeile entspricht,
wobei die selbstfahrende elektronische Vorrichtung **dadurch gekennzeichnet ist, dass** sie Folgendes umfasst:
• eine Lichtquelle (26), die mit dem Chassis gekoppelt und konfiguriert ist, um selektiv zwischen einem EIN-Zustand, um Licht von der ersten Oberfläche weg zu emittieren, und einem AUS-Zustand, um kein Licht zu emittieren, zu wechseln; und
• eine Steuereinheit (28), die mit dem Chassis gekoppelt ist und in Wirkverbindung mit dem Lichtmesser und der Lichtquelle steht, wobei die Steuereinheit konfiguriert ist, um die Lichtquelle in den EIN-Zustand als Antwort darauf, dass das Leuchtdichteniveau des detektierten Lichts unter der Schwellenleuchtdichte liegt, und in den AUS-Zustand als Antwort darauf, dass das Leuchtdichteniveau des detektierten Lichts über der Schwellenleuchtdichte liegt, zu wechseln.

2. Elektronische Vorrichtung nach Anspruch 1, ferner umfassend eine Energievorrichtung (34) in Wirkverbindung mit dem Lichtmesser, der Lichtquelle und dem Zeilensensor, wobei die Energievorrichtung konfiguriert ist, um elektrische Energie zu speichern und den Lichtmesser, die Lichtquelle und den Zeilensensor mit dieser zu versorgen.

3. Elektronische Vorrichtung nach Anspruch 2, wobei die Energievorrichtung konfiguriert ist, um die Energieübertragung zum Lichtmesser, zur Lichtquelle, zum Zeilensensor und zum Bewegungsmechanismus als Antwort auf Inaktivität für einen voreingestellten Zeitraum zu unterbrechen.

4. Elektronische Vorrichtung nach Anspruch 1, wobei die Schwellenleuchtdichte etwa gleich 100 cd/m ist.

5. Elektronische Vorrichtung nach Anspruch 1, wobei der Zeilenzensor konfiguriert ist, um die Zeile in der Grundfläche basierend auf erkannten Farbunterschieden einer durch das Zeilensegment definierten Zeilenfarbe und einer Hintergrundfarbe der Grundfläche zu erfassen.

6. Verfahren zum Bereitstellen einer visuellen Verlaufsanzeige, wobei das Verfahren Folgendes umfasst:
(a) Bereitstellen einer selbstfahrenden elektronischen Vorrichtung, die Folgendes einschließt:
eine erste Oberfläche (22), die einer Grundfläche ("14) zugewandt ist, wenn die elektronische Vorrichtung auf der Grundfläche platziert ist; und
eine Lichtquelle (26), die konfiguriert ist, um selektiv zwischen einem EIN-Zustand, um Licht in Richtung der Grundfläche zu emittieren, und einem AUS-Zustand, um kein Licht zu emittieren, zu wechseln;
(b) Bestimmen eines Leuchtdichteniveaus eines auf die erste Oberfläche einfallenden Lichts;
(c) Umstellen der Lichtquelle in den EIN-Zustand als Antwort darauf, dass das Leuchtdichteniveau unter einer Schwellwertleuchtdichte liegt, und in den AUS-Zustand als Antwort darauf, dass das Leuchtdichteniveau über der Schwellenleuchtdichte liegt;
(d) Erfassen eines Zeilensegments (12) auf der Grundfläche unter Verwendung der Vorrichtung; und
(e) automatisches Bewegen der Vorrichtung entlang des Zeilensegments als Antwort auf das erfasste Zeilensegment.

7. Verfahren nach Anspruch 6, wobei die Grundfläche durch eine Digitalanzeige definiert ist.

## Revendications

1. Dispositif électronique automoteur pour son utilisation sur une surface de base (14),
le dispositif électronique comprenant :
• un châssis (20) disposé, lorsqu'il est utilisé, sur la surface de base, le châssis ayant une première surface (22) en regard de la surface de base lorsque le châssis est disposé sur la surface de base ;
• un luxmètre (24) couplé au châssis et configuré pour :
- détecter une lumière incidente vers la première surface ; et
- déterminer un niveau de luminance de la lumière détectée,
• un détecteur de ligne (30) couplé au châssis et configuré pour détecter un segment de ligne (12) sur la surface de base ; et
• un mécanisme de mouvement (32) couplé au châssis et pouvant être disposé sur la surface de base, le mécanisme de mouvement étant en communication fonctionnelle avec le détecteur de ligne pour se déplacer sur la surface de base dans un schéma correspondant à la ligne détectée sur la surface de base, le dispositif électronique automoteur étant **caractérisé en ce qu'**il comprend :
• une source de lumière (26) couplée au châssis et configurée pour passer sélectivement à un état ON pour émettre de la lumière depuis la première surface et à un état OFF pour ne pas émettre de lumière ; et
• une unité de commande (28) couplée au châssis et en communication fonctionnelle avec le luxmètre et la source de lumière, l'unité de commande étant configurée pour faire passer la source de lumière à l'état ON en réponse au niveau de luminance de la lumière détectée étant en-dessous d'un seuil de luminance et à l'état OFF en réponse au niveau de luminance de la lumière détectée étant au-dessus du seuil de luminance.

2. Dispositif électronique selon la revendication 1, comprenant en outre un dispositif électrique (34) en communication fonctionnelle avec le luxmètre, la source de lumière, et le détecteur de ligne, le dispositif électrique étant configuré pour stocker et fournir une alimentation électrique au luxmètre, la source de lumière, et le détecteur de ligne.

3. Dispositif électronique selon la revendication 2, dans lequel le dispositif électrique est configuré pour interrompre une transmission électrique au luxmètre, la source de lumière, le détecteur de lumière et le mécanisme de mouvement en réponse à l'inactivité pour une période de temps prédéterminée.

4. Dispositif électronique selon la revendication 1, dans lequel le seuil de luminance est approximativement égal à 100 cd/m².

5. Dispositif électronique selon la revendication 1, dans lequel le détecteur de ligne est configuré pour détecter la ligne dans la surface de base sur la base des différences de couleur détectées d'une couleur de ligne définie par le segment de ligne et une couleur de fond de la surface de base.

6. Procédé pour fournir un indicateur de progrès visuel, le procédé comprenant :
(a) la fourniture d'un dispositif électronique automoteur comportant :
une première surface (22) en regard d'une surface de base (14) lorsque le dispositif électronique est placé sur la surface de base ; et
une source de lumière (26) configurée pour passer sélectivement d'un état ON pour émettre de la lumière vers la surface de base à un état OFF pour ne pas émettre de lumière ;
(b) la détermination d'un niveau de luminance d'une lumière incidente vers la première surface ;
(c) le passage de la source de lumière à l'état ON en réponse au niveau de luminance étant en-dessous d'un seuil de luminance et à l'état OFF en réponse au niveau de luminance étant au-dessus du seuil de luminance ;
(d) la détection d'un segment de ligne (12) sur la surface de base en utilisant le dispositif ; et
(e) le déplacement automatique du dispositif le long du segment de ligne en réponse au segment de ligne détecté.

7. Procédé selon la revendication 6 dans lequel la surface de base est définie par un écran numérique.
